# EUROPÄISCHE PATENTANMELDUNG

(11) **EP 2 653 799 A1**
(43) Veröffentlichungstag der Anmeldung: **23.10.2013**
(21) Anmeldenummer: 13163681.3
(22) Anmeldetag: 15.04.2013
(51) Int. Cl.: F24F 13/24, C04B 35/536, F24D 3/16, F24F 5/00

(54) **Plattenelement für eine Heiz- oder Kühlfläche und Verfahren für deren Herstellung**

(30) Priorität: 16.04.2012 DE 102012206185
(71) Anmelder: Lindner Ag, 94424 Arnstorf (DE)
(72) Erfinder: Weber, Martin, 94424 Arnstorf (DE)
(74) Vertreter: Klingseisen, Franz

(57) **Zusammenfassung**

Die Erfindung betrifft ein Plattenelement für eine Heiz- oder Kühlfläche, insbesondere für eine Heiz- oder Kühldecke, wobei die Platte (1) aus verpresstem Graphitmaterial ausgebildet ist und Durchbrechungen (2, 6) oder Aussparungen (7) aufweist, die durch Formgebung des Graphitmaterials bei der Herstellung der Platte (1) oder durch Einpressen nach der Herstellung der Platte (1) ausgebildet sind.

## Beschreibung

Die Erfindung betrifft ein Plattenelement, insbesondere für eine Heiz- oder Kühldecke, das mit Durchbrechungen für die Luftführung und/oder für die Schallabsorption versehen ist, sowie ein Verfähren für die Herstellung solcher Platten.

Es sind Deckenelemente beispielsweise aus einer Gipskartonplatte oder einer Holzplatte bekannt, in der durch mechanische Bearbeitung wie Bohren oder Fräsen Durchbrechungen eingebracht sind, um beispielsweise eine schallabsorbierende Wirkung einer solchen Platte zu erhalten oder Durchbrechungen für den Luftdurchtritt vorzusehen

Erfindungsgemäß wird ein Plattenelement, insbesondere ein Deckenelement vorgesehen, das aus einer relativ dicken Schicht aus verpresstem bzw. verdichteten Graphitmaterial hergestellt wird, in dem durch Formgebung des Graphitmaterials bei der Herstellung oder durch Verformen nach dem Herstellen der Graphitplatte Durchbrechungen oder Aussparungen ausgebildet werden.

Erfindungsgemäß wird ein Plattenelement für eine Heiz- oder Kühlfläche, insbesondere für eine Heiz- oder Kühldecke vorgesehen, wobei die Platte aus verpresstem Graphitmaterial ausgebildet ist und Durchbrechungen oder Aussparungen aufweist, die durch Formgebung des Graphitmaterials bei der Herstellung der Platte oder durch Einpressen nach der Herstellung der Platte ausgebildet sind.

Vorzugsweise werden wenigstens die die Durchbrechungen begrenzenden Flächen der Graphitplatte mit einem Beschichtungsmatenal beschichtet, das den Abrieb von Graphitmaterial durch eine Luftströmung durch die Durchbrechungen verhindert

Anstelle einer Beschichtung im Bereich der Durchbrechungen kann ein Einsatzkörper in dem Graphitmaterial der Platte vorgesehen werden, der eine Durchbrechung aufweist und bei der Herstellung der Graphitplatte als Formkörper verwendet werden kann

Die Durchbrechungen in der Graphitplatte verlaufen zur Luftführung zwischen der einen und der gegenüberliegenden Seite der Platte schräg oder gekrümmt zur Plattenoberfläche, sodass beispielsweise ein senkrecht auf der einen Plattenseite auftreffender Luftstrom auf der gegenüberliegenden Seite in Richtung längs der Plattenoberfläche geführt wird

Die in der Platte ausgebildeten Durchbrechungen können eine langgestreckte, beispielsweise rechteckige Form haben und sie können in Reihe oder kreisförmig angeordnet sein Für bestimmte Anwendungszwecke kann es von Vorteil sein, eine Gruppe von Durchbrechungen in die eine Richtung und eine andere Gruppe von Durchbrechungen in die Gegenrichtung auszubilden, sodass sich auf der Austrittsseite des Luftstroms eine den jeweiligen Anforderungen entsprechende Luftverteilung ergibt

Zweckmäßigeiweise werden die Durchbrechungen dabei so ausgebildet, dass die Lufteintrittsöffnung auf der einen Seite der Platte versetzt ist zu der Lufiaustiittsöfkung auf der gegenüberliegenden Plattenseite.

Dabei kann die Versetzung derart ausgebildet werden, dass bei Betrachtung der Platte senkrecht zur Plattenoberfläche die jeweilige Luftdurchtrittsöffnung von Graphitmaterial überdeckt ist, das im Inneren der Graphitplatte die Durchbrechung begzenzt.

Nach einer vorteilhaften Ausgestaltung kann auf der Lufteintrittsseite eine Erweiterung, beispielsweise eine trichterförmige Erweiterung der Lufteintrittsöfnung vorgesehen werden, um die Luftzuführung zu den Durchbtechungen zu begünstigen, wobei der die Luftumlenkung bewirkende Abschnitt der Durchbrechung vorzugsweise längs einer Tiichteifläche der Lufteintrittsöffnung zur gegenüberliegenden Seite verläuft.

Insbesondere zusätzlich zu den für die Luftführung bzw. die Luftumlenkung vorgesehenen Durchbrechungen in der Graphitplatte können auch Einprägungen oder trichterrormige Durchbrechungen auf der dem zu klimatisiezenden Raum zugewandten Sichtseite der Graphitplatte vorgesehen werden, die durch eine von der Sichtseite aus trichteiförmige Gestaltung zur Schallabsorption dienen, wobei die schallabsorbierende Wirkung vor allem durch die Schallumlenkung bei Auftreffen auf den Schrägflächen der Durchbrechungen oder Einprägungen in der Graphitplatte erzielt wird.

Die Erfindung wird beispielsweise anhand der Zeichnung näher erläutert. Es zeigen
- Fig 1: eine Querschnittsansicht einer Gtaphitplatte mit einer düsenartigen Struktur einer Durchbrechung,
- Fig 2: eine perspektivische Ansicht einer reihenförmigen Anordnung solcher Durchbrechungen,
- Fig. 3: einen Formkörper in perspektivischer Ansicht,
- Fig 4: einen Einsatz in eine Graphitplatte mit einer Düsenstruktur,
- Fig. 5: eine Querschnittsansicht mit einer anderen Form der Durchbrechung,
- Fig. 6: eine weitere Ausführungsform in einer Schnittansicht, und
- Fig. 7: eine weitere Ausführungsform einer Graphitplatte mit Aussparungen,

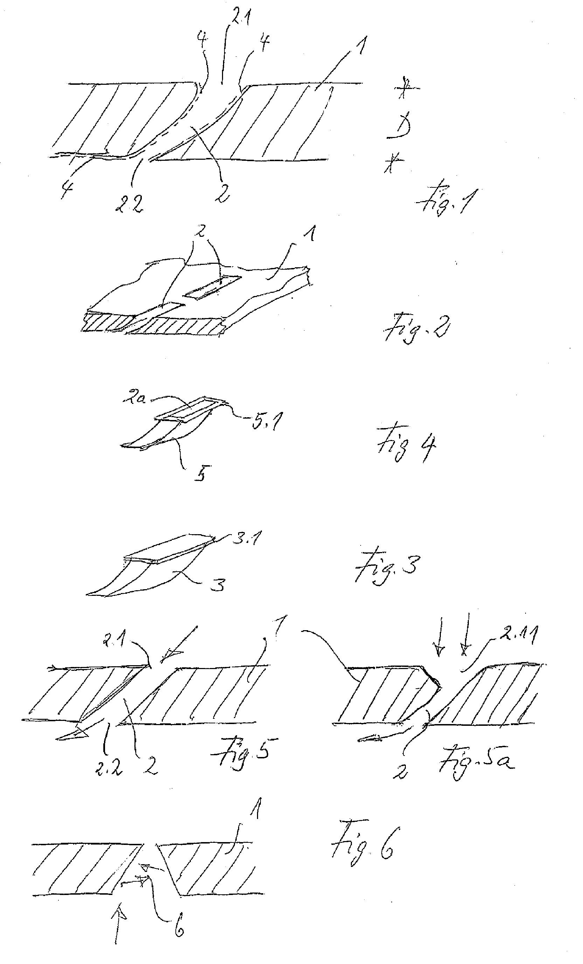

Fig. 1 zeigt eine Graphitplatte 1, die aus verpresstem bzw. verdichtetem Graphitmaterial ausgebildet ist, das im Ausgangszustand fließfähig in Partikelfoim vorliegt Im verdichteten Zustand bildet das Graphitmaterial eine Platte 1 mit geringem Gewicht und guter Wärrneleitfähigkeit, die insbesondere in Verbindung mit weiteren flächigen Elementen z B bei einem Deckenelement für die Raumklimatisierung vorgesehen weiden kann.

Die Graphitplatte 1 weist eine Dickenabmessung D auf, die vorzugsweise im Bereich von etwa 2 bis 3 cm liegt Bei der Herstellung der Graphitplatte 1 werden durch Formgebung des zu verdichtenden partikelförmigen Graphitmaterials Durchbrechungen 2 ausgebildet, die z.B. durch einen an einem nicht dargestellten Werkzeug angebrachten Formkörper ausgebildet werden, der die Formgebung der herzustellenden Durchbrechung 2 vorgibt Hierbei können die Durchbrechungen 2 eine Form haben, die durch mechanische Bearbeitung einer verpressten Graphitplatte nicht oder nur unter großem Aufwand hergestellt weiden können

Fig. 1 zeigt eine düsenförmige Struktur der Durchbrechung 2 als Beispiel für eine Formgebung des Graphitmaterials, die in dieser Form durch mechanische Bearbeitung nur unter großem Aufwand hergestellt werden könnte. Die düsenförmige Durchbrechung 2 weist auf der Oberseite der Graphitplatte 1 eine Lufteintrittsfläche von größerem Querschnitt auf, der sich zur Unterseite hin verjüngt, wobei die Durchbrechung 2 von der oberen Eintrittsöffnung 2.1 zur unteren Austrittsöffnung 2.2 gekrümmt ist.

Diese düsenförmige Durchbrechung 2 der Fig 1 kann im Querschnitt rund ausgebildet sein Sie wird vorzugsweise mit einem etwa rechteckigen Eintritts- und Austrittsquerschnitt versehen, wie dies Fig. 2 schematisch zeigt, die eine Reihenanordnung von solchen Durchbrechungen 2 in einem Plattenelement 1 aus Graphitmaterial zeigt.

Durch die dargestellte Düsenform wird die durch die Durchbrechung 2 strömende Luft längs der Unterseite der Platte 1 geführt, wie dies bei bestimmten Anwendungen einer Heiz- oder Kühldecke gewünscht ist

Fig 3 zeigt einen düsenförmigen Formkörper 3 beispielsweise aus Kunststoffmaterial, der bei der Herstellung der Graphitplatte 1 die Formgebung der Durchbrechung 2 vorgibt. Dieser Formkörper 3 kann an einem nicht dargestellten Werkzeug über einen schematisch wiedergegebenen Flansch 3.1 befestigt sein, durch das der Formkörper 3 nach dem Verdichten bzw Verpressen der Graphitplatte 1 aus der Graphitmaterial herausgezogen wird Bei einer solchen Ausgestaltung kann der Formkörper 3 aus Vollmaterial bestehen.

Um beim Luftdurchtritt durch die Durchbrechungen 2 der Graphitplatte 1 eine erhöhte Abriebfestigkeit der Oberfläche in den Durchbrechungen 2 zu erhalten, werden diese vorzugsweise mit einer Beschichtung versehen, die z B aus Wasserglas, einem Lack oder dergleichen im Ausgangszustand flüssigen und verfestigbaren Beschichtung ausgebildet sein kann, die in Fig. 1 bei 4 durch eine gestrichelte Linie angedeutet ist Die Beschichtung kann sich über die gesamte Oberfläche der Platte 1 erstrecken

Die Beschichtung der Innenwände der Durchbrechungen 2 wird möglichst glatt ausgebildet, um Turbulenzen bei Durchströmen der Luft zuverlässig zu vermeiden

Fig. 4 zeigt eine entsprechend dem Formkörper 3 ausgebildete Düse 5, die einer Beschichtung der düsenförmigen Durchbrechung 2 in Fig. 1 entsprechend geformt ist Eine solche Düse 5 könnte nach der Herstellung der Graphitplatte 1 in die Durchbrechung 2 eingesetzt werden, vorteilhafterweise wird aber ein solcher düsenförmige Einsatzkörper 5 entsprechend dem Formkörper 3 bereits bei der Herstellung der Graphitplatte als Werkzeug für die Formgebung der Durchbrechung verwendet, worauf diese Düse 5 nach der Formgebung der Graphitplatte 1 in dieser verbleibt, sodass die Oberfläche der Durchbrechung 2 nicht mehr beschichtet zu werden braucht

Bei der schematischen Darstellung in Fig 4 ist der Einsatzkörper 4 auf der Oberseite beispielsweise mit einem Flansch 4.1 versehen, der auf der Oberseite der Graphitplatte 1 anliegen kann Die düsenförmige Durchbrechung in dem Einsatzkörper 5 ist mit 2a bezeichnet Ein Einsatzkörper 5, wie er als Beispiel in Fig. 4 wiedergegeben ist, kann aus Kunststoff, Metall oder Keramik ausgebildet sein

Fig. 5 zeigt eine Ausführungsform, bei der die Durchbrechung 2 bei gleichbleibendem Querschnitt von der Ober- zur Unterseite schräg durch die Graphitplatte 1 verläuft. Auch bei einer solchen Ausführungsformkann entweder eine Beschichtung 4 oder ein Einsatzkörper 5 vorgesehen werden.

Bei dem Ausführungsbeispiel der Fig 5 hat die Lufteintrittsöfnung 2.1 auf der Oberseite der Graphitplatte 1 im Wesentlichen den gleichen Querschnitt wie die untere Austrittsöffnung 2 2, sodass der für die Herstellung einer solchen Graphitpatte 1 erforderliche Formkörper einfach gestaltet weiden kann, beispielsweise leistenförmig, wenn langgestreckte Durchbrechungen vorgesehen werden sollen, wie in Fig. 2 angedeutet

Wie bei der Ausfuhrungsform nach Fig. 1 ist auch bei dem Ausführungsbeispiel nach Fig. 5 die Lufteintrittsöffnung 2 1 in der Ebene der Platte 1 versetzt zu der Luftaustrittsöffnung 2.2 derart, dass bei einer Betrachtung der Platte 1 senkrecht zur Plattenoberfläche die jeweils gegenüberliegende Öffnung nicht sichtbar ist, der Öffnungsquerschnitt am Ein- oder Austritt also durch das Graphitmaterial der Platte 1 überdeckt wird

Je nach Art der gewünschten Luftführung durch die schräg zur Plattenoberfläche verlaufende Durchbrechung 2 kann die Neigung der Durchbrechung 2 relativ zur Plattenebene frei gewählt und eingestellt werden, wobei durch Verpressen des im Ausgangszustand pulverformigen Graphitmaterials auch aufwendige Formgebungen der Durchbrechungen 2 möglich sind.

Durch unterschiedliche Ausrichtung von solchen schrägen Durchbrechungen 2 kann die Luftströmung auf der Unterseite der Graphitplatte 1 vorgegeben werden, Beispielsweise können in einer Reihe von Durchbrechungen 2 jeweils benachbarte Durchbrechungen in die entgegengesetzte Richtung geneigt angeordnet sein, sodass sich längs einer Reihe von Durchbrechungen 2 auf der Unterseite der Platte eine Strömung nach links und rechts ergibt

In der gleichen Weise können Durchbrechungen 2 strahlenförmig in einem Kreis angeordnet sein, wobei sie auch unterschiedliche Ausrichtungen haben können.

Bevorzugt wird eine Formgebung der Durchbrechung 2 derart, dass bei etwa senkrecht auf eine Seite des Plattenelementes 1 auftreffendem Luftstrom auf der gegenüberliegenden Austrittsseite der Luftstrom in eine im Wesentlichen längs der Plattenoberfläche verlaufende Luftströmung durch die Durchbrechung 2 umgelenkt wird Hierfür kann die Durchbrechung 2 eine gekrümmte Formgebung haben entsprechend der in Fig 1 wiedergegebenen gekrümmten Form oder die Durchbrechung 2 kann einen schrägen Verlauf durch die Plattenstärke haben, wie dies Fig. 5 zeigt. Bei letzterer Ausführungsform ist es von Vorteil, wenn bei senkrecht auf die Oberseite der Graphitplatte in Fig. 5 auftreffendem Luftstrom die Eintrittsöffnung 2.1 der Durchbrechung 2 erweitert ist, beispielsweise trichterförmig durch abgeschrägte Ränder der Eintrittsöffnung, worauf die Durchbrechung 2 schräg zur Unterseite verläuft, beispielsweise längs einer Trichterfläche, wie dies Fig 5a schematisch zeigt, sodass der austretende Luftstrom längs der Unterseite der Platte entlanggeführt wird

Unabhängig von der Ausgestaltung der Durchbrechungen 2 kann die Graphitplatte auch schräg zur Oberfläche der Platte angeströmt werden, beispielsweise von rechts in Fig. 5a

Fig 6 zeigt eine Ausfühnungsfozm einer Graphitplatte 1, bei der bei der Herstellung der Graphitplatte durch Formkörper oder nach deren Herstellung Durchbrechungen 6 durch Verformen des Graphitmaterials ausgebildet sind Bei dem in Fig. 6 dargestellten Ausführungsbeispiel ist die Durchbrechung 6 etwa trichterförmig im Falle eines runden Querschnitts ausgebildet, sodass von unten durch den größeren Querschnitt der Durchbrechung 6 einfallender Schall, der durch Pfeile angedeutet ist, innerhalb der Durchbrechung 6 reflektiert und damit weitgehend absorbiert wird, Die Durchbrechungen 6 können auch eine langgestreckte Rechteckform haben, ähnlich der Ausgestaltung in Fig. 2.

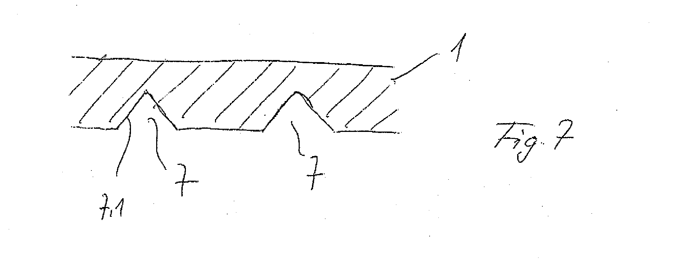

Nach einer weiteren Ausgestaltung können auf der unteren Sichtseite der Graphitplatte 1 Aussparungen 7 durch Verformen der Graphitplatte 1 eingebracht sein, die durch ihre schrägen Seitenflächen 7.1 eine schallabsorbierende Wirkung haben Fig 7 zeigt ein Ausfühxungsbeispiel solcher Aussparungen 7, in die auch ein schallschluckendes Material eingelagert weiden kann

Eine erfingdungsgemäß gestaltete Graphitplatte 1 wird vorzugsweise in Verbindung mit einer nicht dargestellten Trägezplatte verwendet, die beispielsweise aus Metall, Gipskarton oder Holz bestehen kann Eine auf der Rückseite der Graphitplatte 1 bzw. auf der oberen Seite in den Figuren angebrachte Trägerplatte wird bei den Ausführungsformen nach den Fig. 1 bis 6 mit Durchbrechungen versehen, die die Lufteintrittsöffnungen 2.1 und 2.11 in der Graphitplatte freilassen

Je nach Werkzeug und Gestaltung von Formkörpern am Werkzeug für die Herstellung und Verdichtung der Graphitplatte 1 können unterschiedliche Formgebungen der Durchbrechungen in der Graphitplatte 1 ausgebildet werden Die Durchbrechungen oder Durchdringungen können tiegelförmig, zylindrisch, rechteckig, im Querschnitt nach unten verengend oder im Querschnitt nach unten erweiternd, spiralförmig, sichelförmig oder schräg ausgerichtet bzw. schräg durch die Plattenstärke führend wie in Fig. 5 ausgebildet sein.

Eine erfindungsgemäß gestaltete Graphitplatte 1 wird vorzugsweise bei einem Decken- oder Wandaufbau vorgesehen, bei dem im Dcckenhohlraum ein Überdruck herrscht und durch den Überdruck Luft durch die Durchbrechungen 2 in der Graphitplatte 1 in den zu klimatisierenden Raum geleitet wird.

Eine erfindungsgemäß gestaltete Graphitplatte 1 kann aber auch für andere Flächenelemente verwendet werden, die für eine Raumklimatisierung eingesetzt werden.

## Patentansprüche

1. Plattenelement für eine Heiz- oder Kühlfläche, insbesondere für eine Heiz- oder Kühldecke,
wobei die Platte (1) aus verpresstem Graphitmaterial ausgebildet ist und Durchbrechungen (2,6) oder Aussparungen (7) aufweist, die
durch Formgebung des Graphitmaterials bei der Herstellung der Platte (1) oder durch Einpressen nach der Herstellung der Platte (1) ausgebildet sind.

2. Plattenelement nach Anspruch 1, wobei wenigstens die die Durchbrechungen (2) begrenzenden Flächen in der Graphitplatte (1) mit einem Beschichtungsmaterial (4) beschichtet sind, das den Abrieb von Graphitmaterial durch eine Luftströmung durch die Durchbrechung verhindert.

3. Plattenelement nach Anspruch 1, wobei ein Düsen- oder Formkörper (5) in der Graphitplatte (1) eingesetzt ist, der mit einer Durchbrechung (2a) versehen ist

4. Plattenelement nach einem der vorhergehenden Ansprüche, wobei die Durchbrechungen (2) schräg oder gekrümmt durch die Platte (1) derart verlaufen, dass ein auf dem Plattenelement (1) auftreffender Luftstrom auf der gegenüberliegenden Austrittsseite in eine im Wesentlichen längs der Plattenoberfläche verlaufende Luftströmung umgelenkt wird

5. Plattenelement nach einem der vorhergehenden Ansprüche, wobei die Lufteintrittsöffnung (2.1) auf der einen Seite der Graphitplatte (1) versetzt ist zur Luftausttittsöffnung (2.2) auf der gegenüberliegenden Plattenseite.

6. Plattenelement nach Anspruch 5, wobei die Lufteintrittsöfnung (2.1) gegenüber der Luftaustrittsöffnung (2.2) derart versetzt ist, dass die beiden Öffnungen bei Betrachtung senkrecht zur Graphitplatte (1) von Graphitmaterial überdeckt sind.

7. Plattenelement nach einem der vorhergehenden Ansprüche, wobei die Durchbrechungen (2) eine im Wesentlichen rechteckige Querschnittsform haben.

8. Plattenelement nach einem der vorhergehenden Ansprüche, wobei die Durchbrechungen (2) an einer Graphitplatte (1) in unterschiedlichen Richtungen verlaufen.

9. Plattenelement nach einem der vorhergehenden Ansprüche, wobei die Durchbrechungen (2) reihenförmig oder kreisförmig angeordnet sind

10. Verfahren zum Herstellen eines Plattenelementes für eine Heiz- oder Kühlfläche, wobei fließfähiges Graphitmaterial in Plattenform verpresst wird und beim Verpressen durch Formkörper (4) Durchbrechungen (2, 6) in der Graphitplatte (1) ausgebildet werden, die nach dem Verpressen aus der Graphitplatte wieder entfernt werden
